# FASCICULE DE BREVET EUROPEEN

(11) **EP 3 177 884 B1**
(45) Date de publication et mention de la délivrance du brevet: **05.12.2018**
(21) Numéro de dépôt: 15757343.7
(22) Date de dépôt: 03.08.2015
(51) Int. Cl.: A61B 90/00, F26B 23/00, F26B 3/04, F26B 17/02

(54) **PROCÉDÉ ET INSTALLATION DE SÉCHAGE THERMIQUE DE PRODUITS PÂTEUX**
VERFAHREN UND ANLAGE ZUR THERMISCHEN TROCKNUNG VON PASTÖSEN PRODUKTEN
METHOD AND FACILITY FOR THERMALLY DRYING PASTY PRODUCTS

(30) Priorité: 08.08.2014 FR 1457707
(43) Date de publication de la demande: 14.06.2017
(73) Titulaire: Suez International, 92040 Paris la Défense Cedex (FR)
(72) Inventeur: PARDO, Pierre Emmanuel, F-91400 Orsay (FR)
(74) Mandataire: IPAZ
(86) Numéro de dépôt international: PCT/IB2015/055887
(87) Numéro de publication internationale: WO 2016/020829

(56) Documents cités:
- WO-A1-2004/046629
- WO-A1-2011/061715
- WO-A2-01/58815
- DE-A1- 19 825 597

## Description

### Domaine technique

La présente invention se rapporte au domaine du séchage thermique de produits pâteux, par exemple mais de manière non limitative de boues résiduaires provenant de stations d'épuration d'eaux. Elle concerne un procédé de séchage thermique de produits pâteux et un sécheur pour la mise en ouvre du procédé. Le document WO2004/046629 montre un procédé avec les caractéristiques du préambule de le revendication 1 et un sécheur avec les caractéristiques du préambule de la revendication 8.

### Etat de la technique antérieure

Les boues résiduaires comprennent de l'eau et des matières sèches. La siccité d'une boue indique sa teneur en matières sèches. Typiquement, une boue est dite pâteuse lorsque sa siccité est comprise entre 10 et 25%, elle est dite solide lorsque sa siccité est comprise entre 25 et 85%, et elle est dite sèche lorsque sa siccité est supérieure à 85%.

Le séchage de boues résiduaires, c'est-à-dire leur transformation en boues sèches, est utile pour leur valorisation. En particulier, des boues séchées ne fermentent pas, ce qui favorise les conditions de leur stockage, et elles peuvent servir de produit d'épandage ou être brûlées comme combustible.

On connaît dans l'art antérieur plusieurs procédés de séchage thermique permettant d'évaporer l'eau contenue dans des boues à l'aide des types de sécheur suivants :
- les sécheurs à contact direct réalisant un séchage par convection en mettant un fluide chaud, typiquement un gaz, directement en contact avec des boues,
- les sécheurs à contact indirect réalisant un séchage par conduction en transmettant une chaleur de séchage à des boues par l'intermédiaire d'une paroi chauffée par un fluide caloporteur, typiquement un gaz ou un liquide,
- les sécheurs mixtes mettant en oeuvre les principes des sécheurs à contact direct et à contact indirect.

Le principal inconvénient du séchage thermique est que sa mise en oeuvre implique une dépense énergétique importante, ce qui entraîne des coûts d'exploitation importants. Typiquement, les sécheurs actuels nécessitent pour le séchage de boues résiduaires une énergie d'environ 900-1100 kWh/TEE (Tonne d'Eau Evaporée).

Un type très utilisé de sécheurs à contact direct est un sécheur à bandes. Typiquement, un sécheur à bandes comprend une ou plusieurs bandes transporteuses sur lesquelles sont disposées des boues à sécher où elles sont soumises à un écoulement d'air chaud appliqué de manière parallèle ou perpendiculaire à leur sens de déplacement. En général, les boues sont au préalable mises en forme à l'aide d'une extrudeuse ou d'un granulateur afin d'augmenter la surface d'échange.

Les sécheurs à bandes sont très robustes et faciles d'exploitation. Ils présentent toutefois plusieurs inconvénients ou limites :
- pour obtenir une boue ayant une siccité donnée en sortie de sécheur, l'utilisation d'une température de séchage basse implique d'utiliser un sécheur de grande taille brassant une forte quantité d'air, ce qui génère des consommations électriques élevées,
- ils ne permettent pas de prévenir les risques d'auto-échauffement des boues car leur température en sortie de sécheur peut difficilement être ramenée en-dessous de 30°C dans la mesure où le séchage est réalisé par écoulement d'air chaud.

Ainsi, un but de l'invention est de refroidir les boues en sortie de sécheur afin de pouvoir stocker ces boues sans risque d'auto-échauffement. En effet, l'auto-échauffement des boues est une problématique très importante pour tout exploitant de sécheur. Il se caractérise par une montée en température importante des boues séchées dans le stockage. Cette montée pouvant conduire à un démarrage de feu couvant dans le stockage par auto-inflammation. Cet auto-échauffement provient de réactions d'oxydoréduction qui augmentent localement la température des boues. Ces réactions d'oxydoréduction sont accélérées par la température des boues. De plus, si les boues sont chaudes au départ, la température atteinte finale sera d'autant plus élevée et d'autres réactions de combustion pourront ensuite s'engager.

Dans des procédés de sécheur à bandes, par exemple tel que décrit dans le document WO 2004/046629, il est connu de faire rentrer de l'air ambiant à la fin du sécheur, ce qui peut participer au refroidissement des boues séchées. Toutefois, un tel refroidissement n'est pas contrôlé car cette rentrée d'air est destinée à compenser une sortie d'air due à la purge de boucles d'air fermées et à la mise en dépression du sécheur.

Pour limiter au maximum le risque d'auto-échauffement, les boues doivent impérativement être refroidies à une température typiquement inférieure à 35°C et avantageusement inférieure à 20°C. Or, typiquement, la température des boues dans le sécheur est supérieure à 50°C voire 80°C dans des étapes de séchage. Une petite entrée d'air à température ambiante non contrôlée ne peut donc pas maitriser cette température en sortie de sécheur de manière efficace.

Un autre inconvénient des sécheurs à bandes connus est que les boues peuvent colmater les bandes transporteuses lorsque les boues en entrée ont une siccité insuffisante et lorsque la température de séchage utilisée dans le sécheur est basse.

En effet, pendant son séchage, une boue passe par une phase plastique, correspondant typiquement à une siccité de 45-55%, au cours de laquelle elle devient visqueuse et collante.

Pour pallier cet inconvénient, il est connu de faire recirculer une partie des boues, soit pour éviter qu'elles subissent la phase plastique au sein d'un sécheur, soit pour préparer les boues en amont afin qu'elles soient compatibles avec la technologie de séchage utilisée.

Toutefois, une recirculation est compliquée et difficile à gérer.

Le brevet EP 0 781 741 B1 décrit un système de séchage thermique permettant de réduire la dépense énergétique par réutilisation d'une partie de l'énergie utilisée dans un premier étage de séchage. Le premier étage réalise une étape de pré-évaporation. Le deuxième étage de ce système de séchage consiste en un sécheur à bandes qui réutilise l'énergie du premier étage.

Un tel système de séchage avec pré-évaporation des boues permet d'obtenir des consommations réduites de 700-800 kWh/TEE.

Cependant, un tel système de séchage à deux étages possède plusieurs inconvénients :
- il met en oeuvre deux sécheurs, correspondant respectivement au premier étage et au deuxième étage de séchage, et implique de réaliser une opération d'extrusion des boues entre les deux sécheurs, ce qui nécessite une forte ventilation de ce local,
- les bouclages énergétiques ne sont pas optimisés compte-tenu de la siccité des boues en sortie d'étape de pré-évaporation, typiquement 40-60%, et de la température de séchage requise dans le deuxième étage, typiquement 120°C, pour sécher les boues.

On connaît aussi dans l'art antérieur des procédés de séchage dans lesquels des calories à basse température, typiquement 50-90°C, de chaleur « fatale », c'est-à-dire résiduelles dans d'autres dispositifs (moteur de cogénération, pompe à chaleur, chaudière, ...), sont utilisées pour chauffer un fluide de séchage d'un sécheur thermique.

Cependant, la chaleur fatale est généralement insuffisante pour sécher totalement des boues dans des sécheurs à bandes. La consommation énergétique des procédés de séchage connus utilisant de l'énergie fatale reste donc importante.

Un but de la présente invention est de proposer un procédé de séchage thermique à bandes optimisant la consommation énergétique.

Un autre but de la présente invention est de proposer un procédé de séchage thermique à bandes permettant de réduire la taille d'un sécheur à bandes.

Encore un autre but de la présente invention est de proposer un procédé de séchage thermique à bandes permettant de refroidir fortement des boues avant leur stockage.

La présente invention a aussi pour but de proposer un procédé de séchage thermique à bandes permettant de sécher des boues ayant une faible siccité.

Un autre but de la présente invention est de proposer un procédé de séchage thermique à bandes adapté à tout type de boues, par exemple mais de manière non limitative des boues mal déshydratées.

Encore un autre but de la présente invention est de proposer un procédé de séchage thermique à bandes dans lequel le séchage de boues est sécurisé, notamment afin de prévenir des risques d'auto-échauffement.

### Exposé de l'invention

Cet objectif est atteint avec un procédé de séchage thermique de produits pâteux, en particulier de boues résiduaires, tel que défini dans la revendication 1.

Selon une particularité avantageuse, l'air à haute température est à une température supérieure à 100°C, de préférence dans la plage de 100 à 200°C, à son arrivée sur les produits pâteux dans l'au moins un compartiment de séchage à haute température.

Selon une autre particularité avantageuse, l'air à basse température est à une température dans la plage de 20 à 90°C à son arrivée sur les produits pâteux dans l'au moins un compartiment de séchage à basse température.

Selon encore une autre particularité avantageuse, les produits pâteux ont une siccité de l'ordre de 25-50%, de préférence 25-35%, lorsqu'ils passent de l'étape de séchage à haute température à l'étape de séchage à basse température.

En particulier, la chaleur récupérée comprend avantageusement de la chaleur de condensation de l'humidité contenue dans l'écoulement d'air sortant de l'au moins un compartiment de séchage à haute température.

On peut aussi chauffer l'air de séchage à basse température avec de la chaleur fatale.

Ces dernières particularités permettent de réduire la consommation énergétique d'un sécheur à bandes.

De préférence, le procédé comprend en outre successivement :
- une étape d'assèchement de l'écoulement d'air à basse température après son contact avec les produits pâteux,
- une étape de réchauffement de l'écoulement d'air asséché en faisant passer cet écoulement au contact thermique du condenseur d'une pompe à chaleur, cette étape de réchauffement générant un écoulement d'air réchauffé,
- une étape de réutilisation de l'écoulement d'air réchauffé en tant qu'écoulement d'air à basse température.

Selon une particularité avantageuse, pour l'étape d'assèchement on fait passer l'écoulement d'air à basse température par l'évaporateur de la pompe à chaleur.

On met à une température désirée l'air de séchage à basse température avec une pompe à chaleur dont on utilise l'évaporateur pour refroidir les produits pâteux ayant subi l'étape de séchage à basse température. Ainsi, les produits pâteux sortent refroidis, ce qui favorise leur conservation sans risque d'auto-échauffement. En outre, la chaleur ainsi extraite, relevée en température par la pompe à chaleur, est utilisée pour mettre à la température désirée l'écoulement d'air à basse température.

Le fonctionnement de la pompe à chaleur peut avantageusement être modulé en fonction des fluctuations du coût d'énergie électrique. Par exemple, si l'électricité est gratuite la nuit et payante le jour, la pompe à chaleur peut être mise en route uniquement la nuit.

On peut aussi utiliser l'évaporateur de la pompe à chaleur pour une deuxième étape de condensation de l'eau contenue dans l'écoulement d'air à basse température après son contact avec les produits pâteux et ayant déjà subi une première étape de condensation. Là encore, en ne consommant que l'énergie modique absorbée par la pompe à chaleur, on obtient un double effet thermique favorable dans le procédé.

De préférence, on régule la puissance de la pompe à chaleur pour ne pas dépasser un seuil de température haut prédéterminé pour l'air sortant du condenseur de la pompe à chaleur, et on régule la puissance de l'étape de séchage à basse température pour ne pas dépasser vers le bas un seuil de température bas de l'évaporateur de la pompe à chaleur. On maintient ainsi la pompe à chaleur dans une gamme de température où elle est efficace.

Selon une particularité avantageuse, l'air froid est à une température dans la plage de -5 à 30°C, de préférence dans la plage de 5 à 20°C, à son arrivée sur les produits pâteux dans l'au moins un compartiment de refroidissement.

Dans un mode préféré de mise en oeuvre, l'au moins une bande transporteuse comprend une première et une deuxième bandes transporteuses, et les produits pâteux sont déposés sur la première bande transporteuse pendant l'étape de dépôt et transférés sur la deuxième bande transporteuse pendant l'étape de déplacement, le transfert étant réalisé dans un module de retournement. Typiquement, les produits pâteux sont transférés sur l'autre bande transporteuse alors que leur siccité est supérieure à environ 55%, c'est-à-dire lorsqu'ils ont dépassé la phase plastique de leur séchage.

L'étape de séchage à basse température est de préférence réalisée dans un premier compartiment de séchage à basse température avant le transfert et dans un deuxième compartiment de séchage à basse température après le transfert.

Au cours de l'étape de dépôt, on dépose les produits pâteux de préférence sous forme de spaghettis sur l'au moins une bande transporteuse.

L'invention concerne aussi un sécheur tel que défini dans la revendication 8.

Selon une particularité avantageuse, le sécheur comprend en outre au moins un module de retournement apte à transférer les produits pâteux d'une bande transporteuse à une autre bande transporteuse à un certain stade le long du trajet de traitement.

Selon encore une autre particularité avantageuse, les deux bandes transporteuses sont superposées.

Le sécheur comprend avantageusement des moyens d'isolation thermique entre compartiments adjacents.

De préférence, le sécheur comprend des moyens pour maintenir en dépression une partie au moins des compartiments.

Dans un mode de réalisation préféré, l'au moins un circuit à haute température comprend au moins un condenseur apte à condenser au moins une partie de l'eau contenue dans l'air écoulé au sein de l'au moins un compartiment de séchage à haute température, l'au moins un condenseur servant de moyen de chauffage pour l'écoulement d'air à basse température.

Selon une particularité avantageuse, l'écoulement d'air à basse température est réchauffé par ledit au moins un condenseur après avoir subi un premier réchauffage.

Selon encore une autre particularité avantageuse, entre la sortie du compartiment de séchage à basse température et ledit évaporateur, l'écoulement d'air à basse température passe par un échangeur, en particulier à eau perdue, pour condenser partiellement l'eau contenue dans l'écoulement d'air à basse température.

Ainsi, la pompe à chaleur peut être de plus faible puissance. De ce fait, son condenseur a une température plus modérée et donc son efficacité est meilleure.

Le sécheur peut comprendre au moins un circuit d'eau chaude basse température dans lequel circule de l'eau pour le chauffage de l'écoulement d'air à basse température.

Avantageusement, l'eau circulant dans l'au moins un circuit d'eau chaude basse température est chauffée par l'au moins un condenseur de l'humidité présente dans l'écoulement d'air haute température sortant du compartiment de séchage à haute température.

En variante mais de préférence cumulativement, l'eau circulant dans l'au moins un circuit d'eau chaude basse température peut aussi être chauffée par au moins une source d'énergie extérieure qui peut être d'origine fatale.

D'une façon générale, il est préféré que l'au moins un circuit à basse température comprenne :
- des moyens pour assécher l'écoulement d'air à basse température sortant du compartiment de séchage à basse température,
- une pompe à chaleur dont le condenseur est monté pour réchauffer l'écoulement d'air à basse température asséché.

Dans ce cas, l'évaporateur de la pompe à chaleur est avantageusement monté pour assécher l'écoulement d'air à basse température sortant du compartiment de séchage à basse température.

En variante ou cumulativement, l'évaporateur de la pompe à chaleur peut aussi être monté pour produire un écoulement d'air de refroidissement des produits pâteux sortant du compartiment de séchage à basse température.

Dans un mode de réalisation, le sécheur comprend un échangeur tel qu'à eau perdue ou tout autre moyen de refroidissement, pour assurer une condensation au moins primaire de l'eau contenue dans l'écoulement d'air sortant du compartiment de séchage à basse température.

Selon une autre particularité avantageuse, le circuit de refroidissement et le circuit à basse température ont une partie commune.

Entre autres avantages de l'invention, le refroidissement des boues est réalisé par production d'un air froid spécifique dont la température et le débit peuvent être contrôlés à travers le fonctionnement de la pompe à chaleur. Ainsi, la température des boues séchées en sortie de sécheur peut être pilotée dans un objectif de refroidissement permettant de stocker ces boues sans risque d'auto-échauffement.

L'invention permet ainsi de contrôler finement les paramètres thermiques du refroidissement par un contrôle précis de la température et/ou du débit de l'air froid produit par le dispositif, cela pour atteindre les objectifs de refroidissement visés, c'est-à-dire typiquement pour refroidir les boues jusqu'à une température inférieure à 35°C, avantageusement inférieure à 20°C.

En outre, l'invention permet d'utiliser de la chaleur « pompée » pour produire le froid pour alimenter le sécheur en chaleur.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la FIGURE 1 représente schématiquement en élévation latérale un premier mode de réalisation d'un sécheur à bandes et de ses circuits aérauliques selon l'invention, et
- la FIGURE 2 représente schématiquement en élévation latérale un deuxième mode de réalisation d'un sécheur à bandes et de ses circuits aérauliques selon l'invention.

Dans ce document, on appelle :
- compartiment de séchage à haute température un compartiment dans lequel est écoulé de l'air à haute température, dont la température est de préférence supérieure à 100°C, et de préférence comprise entre 100 et 200°C ;
- compartiment de séchage à basse température un compartiment dans lequel est écoulé de l'air à basse température, dont la température est de préférence comprise entre 20 et 90°C ;
- compartiment de refroidissement un compartiment dans lequel est écoulé de l'air froid, dont la température est de préférence comprise entre -5 et 30°C, et de préférence entre 5 et 20°C.

En outre, les termes « air à haute température », « air à basse température » et « air froid » sont relatifs les uns par rapport aux autres, c'est-à-dire que l'air à haute température a une température supérieure à la température de l'air à basse température, et l'air à basse température a une température supérieure à la température de l'air froid.

Dans la terminologie utilisée dans ce document, un circuit comprend des boucles formant canalisation et reliant des éléments tels que condenseur, ventilateur, compartiment, etc.

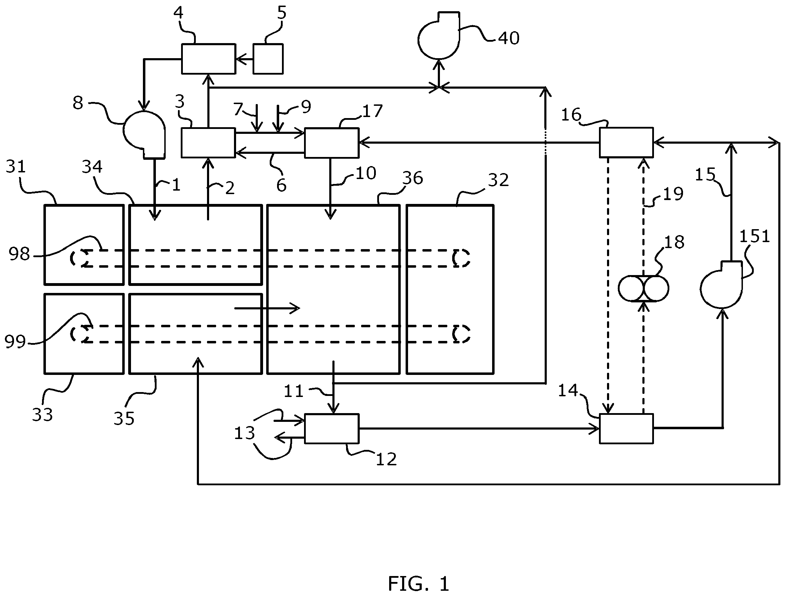

La FIGURE 1 représente un sécheur à bandes comprenant une bande supérieure 98 et une bande inférieure 99.

Ce sécheur à bandes comprend un module d'entrée 31 agencé pour déposer des produits pâteux, notamment des boues résiduaires, ayant par exemple une siccité comprise entre 16 et 30%. Par exemple, ce module reçoit des boues déshydratées depuis un silo de stockage, il transforme ces boues en forme de spaghettis (extrusion) puis les dépose sur la bande supérieure 98 du sécheur à bandes.

Les boues déposées sur la bande supérieure 98 dans le module d'entrée 31 sont déplacées par la bande supérieure 98 jusqu'à un module de retournement 32 agencé pour faire passer ces boues de la bande supérieure 98 à la bande inférieure 99. Les boues arrivées sur la bande inférieure 99 dans le module de retournement 32 sont déplacées par la bande 99 inférieure jusqu'à un module de sortie 33 agencé pour évacuer les boues du sécheur.

Dans le mode de réalisation représenté en FIGURE 1, le sécheur à bandes comprend un compartiment de séchage à haute température 34 adjacent au module d'entrée 31. Ce compartiment de séchage à haute température réalise une étape de séchage à haute température, c'est-à-dire un « saisissement » des boues avec de l'air chaud, afin d'empêcher les boues de fluer sur la bande supérieure 98.

Le compartiment de séchage à haute température 34 situé sur la bande supérieure 98 est ici superposé à un compartiment de refroidissement 35 situé sur la bande inférieure 99. Le compartiment de refroidissement 35 permet de fortement refroidir les boues avant leur évacuation par le module de sortie 33 auquel il est avantageusement adjacent. Un tel refroidissement permet un stockage à long terme sans risque, notamment en termes d'auto-échauffement.

Le compartiment de séchage à haute température 34 et le compartiment de refroidissement 35 sont séparés par une plaque d'isolation mécanique et thermique.

Le sécheur à bandes de la FIGURE 1 comprend aussi un compartiment de séchage à basse température 36 situé entre, d'une part, les compartiments de séchage à haute température 34 et de refroidissement 35 et, d'autre part, le module de retournement 32.

Les compartiments de séchage à haute température 34, de séchage à basse température 36 et de refroidissement 35 reçoivent des écoulements d'air respectifs par l'intermédiaire de circuits aérauliques et d'un système de chauffe décrits ci-dessous.

### Module de séchage à haute température

Le module de séchage à haute température désigne le compartiment de séchage à haute température 34 et le circuit à haute température auquel il est relié.

Le circuit à haute température est agencé pour écouler dans le compartiment de séchage à haute température 34 de l'air chaud par une boucle haute température d'entrée 1 de ce compartiment 34. Cet air chaud est chauffé par tout système de chauffage adapté. Dans l'exemple de la FIGURE 1, ce système de chauffage comprend une source de chaleur 5 et un système d'échange 4 consistant par exemple en un échangeur à huile, vapeur ou autre média chaud, de fumées de combustion (p. ex. moteur) ou encore un brûleur de veine d'air.

Le principe est de faire circuler de l'air chauffé par le système de chauffage 4, 5 dans le circuit à haute température grâce à un ventilateur 8 pour alimenter le compartiment de séchage à haute température 34 via la boucle haute température d'entrée 1 avec de l'air à faible hygrométrie à une température de préférence supérieure à 100°C, et de préférence comprise entre100 et 200°C afin de vaporiser rapidement et fortement l'eau contenue dans les boues situées sur la bande supérieure 98 dans le compartiment de séchage à haute température 34.

L'air encore chaud et chargé d'humidité sortant du compartiment de séchage à haute température 34 par la boucle haute température de sortie 2 est contrôlé en température et en humidité de manière à avoir un air proche de la saturation, typiquement à 95°C et 95% d'humidité (voir la partie « régulation » ci-dessous).

L'air sortant du compartiment de séchage à haute température 34 par la boucle haute température de sortie 2 est ensuite déshumidifié par condensation de l'eau qu'il contient dans un condenseur 3.

Les condenseurs utilisés peuvent être des condenseurs directs (pulvérisation d'eau dans les buées en eau perdue, ou pulvérisation d'eau dans les buées et refroidissement de cette eau par un circuit d'eau externe et appoint de l'eau en circulation) ou des condenseurs indirects (échangeurs eau/buées).

De préférence, le sécheur à bandes est dimensionné de manière à récupérer une boucle d'eau 6 à 40-90°C, de préférence 70°C environ afin de capter la quasi-totalité de la chaleur de condensation par rapport à la chaleur de vaporisation du module de séchage à haute température.

L'air déshumidifié sort du condenseur 3 à une température typique de 40-90°C et est ensuite re-réchauffé par le système de chauffage précédemment décrit.

Une partie de l'air déshumidifié est aspiré par le ventilateur 40 pour une mise en dépression du module de séchage à haute température et un traitement des odeurs.

### Module de séchage à basse température

Le module de séchage à basse température désigne le compartiment de séchage à basse température 36 et le circuit à basse température auquel il est relié.

De l'air froid circulant dans une boucle intermédiaire 15, typiquement compris entre -10°C et 30°C, et préférentiellement 10°C, est réchauffé par l'intermédiaire d'un fluide frigorifique 19 dans un échangeur 16 à une température de 10-60°C, typiquement 30°C. Cet air est ensuite réchauffé dans un échangeur 17 par la boucle d'eau chaude 6 produit par le condenseur 3 à 40-90°C, typiquement 70°C. Cet air chaud et très sec est écoulé dans le compartiment de séchage à basse température 36 par une boucle basse température d'entrée 10 reliant l'échangeur 17 au compartiment de séchage à basse température 36.

L'air extrait du compartiment de séchage à basse température 36 par une boucle basse température de sortie 11 est froid et humide. L'eau que cet air contient est ensuite condensée dans un échangeur d'eau 12, par exemple à eau perdue 13. L'eau 13 est dite « perdue » car elle entre froide et sort froide ou tiède sans qu'on ait nécessairement l'usage de cette eau. L'air ainsi asséché sort de l'échangeur 12 à une température régulée de 10-40°C, typiquement 20°C. La régulation consiste principalement à régler le débit d'eau perdue. L'air asséché est ensuite encore plus asséché par condensation de l'eau qu'il contient dans la partie « évaporateur » 14 d'une pompe à chaleur 18 pour être refroidi à une température typique comprise entre -10°C et 30°C, de préférence 10°C.

Une partie de l'air du circuit à basse température est aspirée par le ventilateur 40 afin de maintenir en dépression le module de séchage à basse température. Dans l'exemple représenté en FIGURE 1, ce ventilateur 40 est relié à la boucle basse température de sortie 11.

### Module de refroidissement

Le module de refroidissement désigne le compartiment de refroidissement 35 et le circuit de refroidissement auquel il est relié.

Dans le mode de réalisation de la FIGURE 1, le circuit de refroidissement est en partie commun avec le circuit à basse température car l'air écoulé dans le compartiment de refroidissement 35 est une partie de l'air provenant de l'évaporateur 14 de la pompe à chaleur 18.

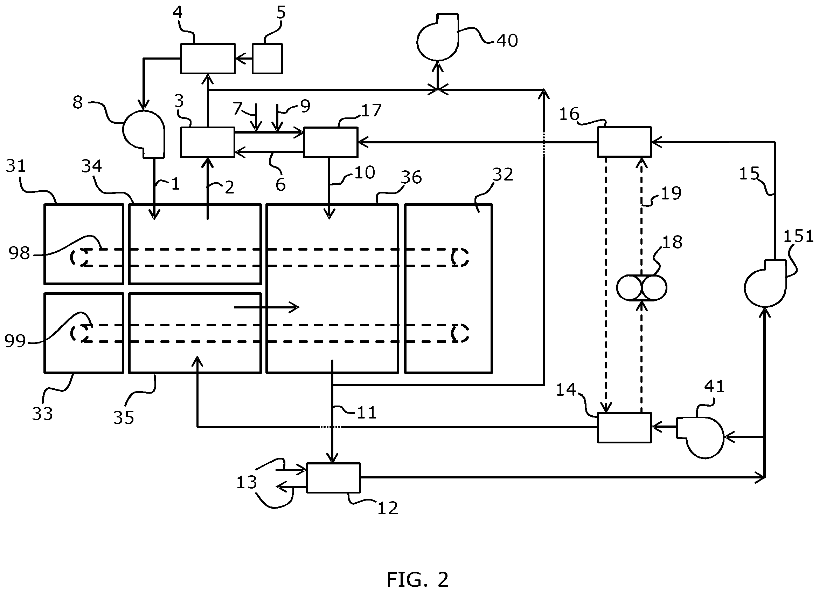

Dans le mode de réalisation de la FIGURE 2, le circuit de refroidissement est une boucle reliant l'évaporateur 14 de la pompe à chaleur 18 et l'entrée du compartiment de refroidissement 35.

### Pompe à chaleur

Dans un mode de réalisation préféré, le circuit à basse température comprend une pompe à chaleur 18 apte à préchauffer l'air circulant dans le circuit à basse température au niveau de l'échangeur 16 dans lequel le condenseur de la pompe à chaleur 18 fournit de la chaleur sensible à l'écoulement d'air à basse température. La pompe à chaleur 18 permet aussi de condenser l'eau contenue dans l'air circulant dans ce circuit à une température très basse au niveau de l'évaporateur 14 afin d'obtenir un air extrêmement sec au niveau de la boucle basse température d'entrée 10 du compartiment de séchage à basse température 36. De plus, une partie de l'air froid 15 produit au niveau de l'évaporateur 14 alimente le compartiment de refroidissement 35 par la boucle intermédiaire 15 afin de refroidir fortement les boues avant leur extraction dans le module de sortie 33.

L'utilisation de la pompe à chaleur 18 participe au bon rendement global du sécheur à bandes, notamment par la création d'un air très sec dans la boucle basse température d'entrée 10 qui une fois réchauffé permet l'utilisation d'un faible débit de séchage, ou encore par la création d'un air très froid dans la boucle intermédiaire 15 qui permet de refroidir les boues dans le compartiment de refroidissement 35, et par l'utilisation des calories ainsi extraites pour chauffer très économiquement l'un des écoulements, en particulier l'écoulement basse température.

L'air froid injecté dans le compartiment de refroidissement 35 par la boucle intermédiaire 15 est ensuite acheminé dans le compartiment de séchage à basse température 36 par la dépression créée par l'aspiration du ventilateur de circulation 151.

Dans le mode de réalisation de la FIGURE 2, un autre ventilateur 41 aspire une partie de l'air en sortie de l'échangeur 12 afin de le faire passer dans l'évaporateur 14 de la pompe à chaleur 18. L'autre partie de l'air sortant de l'échangeur 12, destinée à constituer l'écoulement d'air basse température, by-passe l'évaporateur 14 et va directement au condenseur 16 de la pompe à chaleur. De la même façon que décrit ci-dessus, l'air froid et sec injecté dans le compartiment de refroidissement 35 est ensuite acheminé dans le compartiment de séchage à basse température 36 par la dépression créée par l'aspiration du ventilateur 151.

### Circuits hydrauliques

Plusieurs circuits hydrauliques sont mis en oeuvre dans des variantes du sécheur à bandes selon l'invention.

Pour contrôler la puissance optimale de la pompe à chaleur 18 avant passage dans le condenseur 16 de la pompe à chaleur 18, l'échangeur 12, par exemple à eau perdue 13, peut être mis en place.

La boucle à eau chaude 6 prélève une partie de la chaleur du circuit à haute température par l'intermédiaire du condenseur 3 et vient chauffer l'air du circuit à basse température. De l'énergie extérieure peut être apportée à la boucle à eau chaude 6 par l'intermédiaire de chaleur fatale 7 et/ou, par exemple, d'une chaudière 9.

Un intérêt de la boucle à eau chaude 6 est qu'en cas de possibilité de récupérer de la chaleur fatale 7, l'air circulant dans le circuit à basse température peut être gratuitement chauffé par l'échangeur 17. Le fonctionnement de l'échangeur 12 et du circuit 13 peut ainsi être contrôlé pour permettre une utilisation maximum de ce circuit (voir la partie « régulation » ci-dessous).

En cas de chaleur fatale connue dès le départ, le dimensionnement du module de séchage à haute température est ajusté afin de ne pas consommer trop d'énergie noble, sauf si cette énergie noble est aussi fatale.

Une telle boucle à eau chaude 6 permet de faire face à toutes les situations de récupération de chaleur fatale si elles sont connues dès la conception. En outre, il est possible d'utiliser plus ou moins de chaleur fatale 7 grâce aux régulations possibles, en particulier en séchant moins dans le module de séchage à haute température.

Le sécheur à bandes selon l'invention peut être à un ou à plusieurs étages (en FIGURES 1 et 2, il y a deux étages correspondant aux deux bandes 98, 99) afin d'optimiser sa consommation spécifique. Préférentiellement, il est à deux étages.

### Mise en dépression du sécheur

Comme décrit ci-dessus, le sécheur est mis en dépression afin d'empêcher la propagation des odeurs. Cette mise en dépression peut être faite par un unique ventilateur 40 avec un jeu de vannes (non représenté) pour équilibrer les tuyauteries entre le circuit à basse température passant par le ventilateur 151 et le circuit à haute température passant par le ventilateur 8, ou bien par un ventilateur dédié à la mise en dépression de chacun des circuits.

Des sondes de pression (non représentées) peuvent être judicieusement placées pour donner une information relative à la pression à l'intérieur du sécheur. Une telle information est importante car, d'une part, le sécheur ne doit pas se retrouver en surpression pour éviter d'éventuelles fuites d'odeurs et, d'autre part, le sécheur ne doit pas se retrouver en trop forte dépression pour éviter les éventuelles entrées d'air dans le sécheur, en particulier dans le module d'entrée 31, ce qui modifierait fortement le bilan thermique.

### Isolation thermique et aéraulique

Une isolation thermique renforcée est mise en place entre le compartiment de séchage à haute température 34 et le compartiment de refroidissement 35, au moins lorsque le sécheur comprend plus d'une bande, afin de ne pas réchauffer le compartiment de refroidissement 35 servant au refroidissement des boues.

Entre le compartiment de séchage à haute température 34 et le compartiment de séchage à basse température 36, une isolation est aussi mise en place. Le but d'une telle isolation est davantage d'empêcher une trop grande circulation aéraulique entre ces deux compartiments (refroidissement du compartiment de séchage à haute température 34 ou perte de chaleur du compartiment de séchage à haute température 34 par fuite vers le compartiment de séchage à basse température 36). Il n'est pas nécessaire d'avoir une isolation parfaite car même si de l'air passait du compartiment de séchage à haute température 34 au compartiment de séchage à basse température 36, cet air participerait au séchage des boues.

De préférence, la dépression dans le compartiment de séchage à basse température 36 est légèrement supérieure (i.e. pression plus basse) à celle du compartiment de séchage à haute température 34.

### Nombre de bandes

Une seule bande peut être mise en place. Dans ce cas, aucun module de retournement 32 n'est mis en oeuvre et le compartiment de refroidissement 35 avec son isolation thermique est placé juste après un ou plusieurs modules de séchage à basse température.

Dans le cas de plusieurs bandes, par exemple trois ou quatre bandes, les principes d'agencement sont comparables : trois modules (de séchage à haute température, de séchage à basse température et de refroidissement) sont disposés avec circulation de l'air du compartiment de refroidissement vers le compartiment de séchage à basse température, et circulation neutre entre le compartiment de séchage à haute température et le compartiment de séchage à basse température avec une préférence pour une circulation du compartiment de séchage à haute température vers le compartiment de séchage à basse température.

### Circulation de l'air

Pour les modules de séchage à haute température, à basse température ou de refroidissement, la circulation de l'air peut se faire indifféremment du haut vers le bas ou du bas vers le haut.

L'air sortant du compartiment de refroidissement 35 est dirigé vers le compartiment de séchage à basse température 36 dans n'importe quelle zone de ce compartiment. De plus, l'air peut circuler à travers la bande indifféremment du haut vers le bas, du bas vers le haut, dans le sens de déplacement de la bande ou dans un sens opposé, et être par exemple dirigé par des chicanes disposées de part et d'autre de la bande dans un compartiment donné.

Les circuits, notamment à haute température ou à basse température, peuvent aussi comprendre des filtres d'air disposés de manière à faciliter des opérations de décolmatage ou de remplacement de ces filtres.

### Positionnement des ventilateurs

Le positionnement des ventilateurs 8, 40, 151 sur leur circuit d'air respectif n'est pas limité aux exemples décrits ci-dessus. Ces ventilateurs doivent pouvoir faire circuler l'air dans ces circuits et au travers des échangeurs et permettre une mise en dépression, éventuellement optimisée, dans le sécheur.

La répartition de l'air dans les modules de séchage à haute température, à basse température et de refroidissement peut être réalisée au moyen de déflecteurs aptes à répartir l'air sur la largeur de la ou des bandes du sécheur.

En outre, les modules de séchage à haute température, à basse température et de refroidissement peuvent être constitués de compartiments identiques, et comprendre chacun un ou plusieurs ventilateurs de circulation pour permettre une régulation de la répartition de l'air ainsi que un ou plusieurs échangeurs.

### Exemples de fonctionnement

### Cas 1 : sans énergie gratuite et avec pompe à chaleur

Dans cet exemple, les boues arrivent dans le module d'entrée 31 avec les caractéristiques suivantes : siccité 20%, température 20°C, débit 2 000 kg/h.

On va sécher dans le compartiment de séchage à haute température 34 jusqu'à une siccité d'environ 32%, correspondant à une quantité d'eau évaporée de 750 kg/h. Pour évaporer cette eau, le circuit d'air est constitué d'au moins un ventilateur 8 qui souffle en entrée 1 du compartiment de séchage à haute température 16 600 Nm3/h d'air chaud à 180°C.

En sortie 2 du compartiment de séchage à haute température 34, l'air s'est refroidi pour atteindre une température de 100°C en évaporant de l'eau contenue dans les boues.

Dans le condenseur 3, la boucle 6 permet de refroidir l'air de l'écoulement d'air chaud à une température de 80°C. La boucle d'eau ressort à 75°C environ et a absorbé 626 kW environ.

L'air chaud est ensuite réchauffé dans le système d'échange 4 à 180°C, en consommant 679 kW par l'intermédiaire d'une source de chaleur 5.

La boucle d'eau 6 permet de réchauffer l'air du circuit à basse température à une température de 70°C en 10 pour un débit d'environ 50 000 Nm3/h.

L'air sortant en 11 du compartiment de séchage à basse température 36 a une température d'environ 38°C et a permis d'évaporer l'ensemble de l'eau à évaporer qui était contenue dans les boues pour atteindre la siccité voulue.

Un échangeur 12 alimenté avec de l'eau à 15°C permet de ramener la température de l'air à 20°C ce qui correspond à la condensation d'une grande quantité de l'eau qu'il contient.

Dans le cas où l'on fait subir à l'ensemble de l'air un nouvel assèchement par la pompe à chaleur (FIGURE 1), celle-ci refroidit l'air jusqu'à une température de 10°C et re-réchauffe ensuite l'air jusqu'à une température de 32°C environ. Environ 5 000 Nm3/h d'air est prélevé en 15 pour être injecté dans le compartiment de refroidissement 35, et permet de refroidir les boues jusqu'à une température de 20°C environ.

Dans ce premier cas, la consommation électrique de la pompe à chaleur est d'environ 70 kWe. La quantité d'eau évaporée totale étant de 1.56 TEE (tonne d'eau évaporée) par heure on obtient une consommation thermique de 440 kWhth/TEE.

### Cas 2 : sans énergie gratuite et sans pompe à chaleur

Sans pompe à chaleur, on va pousser le séchage du premier étage à 35% de siccité augmentant la consommation du premier étage de 770 kW environ. Ceci permet une plus grande récupération d'énergie sur le deuxième étage car il n'est plus réchauffé jusqu'à 32°C par la pompe à chaleur mais reste à 20°C.

Dans ce deuxième cas, la consommation thermique totale est de 500 kWh/TEE environ et une consommation électrique de 0 (pas de pompe à chaleur).

### Cas 3 : avec énergie gratuite et avec pompe à chaleur

Prenons le cas d'une énergie gratuite d'un moteur de cogénération permettant de fournir 300 kWhth/TEE, soit dans notre cas 468 kWth.

Le meilleur équilibre du système se situe alors pour une siccité de sortie de premier étage de 26%, nécessitant une consommation de 432 kWhth seulement dans ce premier étage.

La condensation dans le condenseur 3 et l'ajout d'énergie fatale 7 à la boucle d'eau 6 permet de subvenir aux besoins de l'air par l'intermédiaire de l'échangeur 17 si une pompe à chaleur est installée.

Dans ce troisième cas, la consommation électrique de la pompe à chaleur est de 100 kWe dans ce cas, ce qui donne une consommation thermique de 280 kWh/TEE et de 63 kWhe/TEE.

### Régulation

Le sécheur est dimensionné sur la base d'une siccité des boues dans le module d'entrée 31, d'une siccité des boues en sortie du compartiment de séchage à haute température 34 et d'une siccité des boues dans le module de sortie 33, de sorte que l'énergie produite dans le condenseur 3 soit tout juste suffisante pour alimenter le circuit à basse température en 17.

En effet, l'optimum de la consommation thermique du sécheur se situe au point où il n'est plus besoin de fournir de l'énergie extérieure 9 pour sécher suffisamment les boues dans le compartiment de séchage à basse température. Les régulations mises en place permettent de toujours rester autour de cet optimum tout en maîtrisant la siccité finale des boues avant leur extraction du sécheur par le module de sortie 33, cela en fonction des modifications de siccité et de débit d'entrée des boues dans le module d'entrée 31.

Par exemple, un signal de consommation d'énergie en 9 est donné au sécheur, ce signal a pour effet d'augmenter dans une certaine plage la consigne de température de l'air en sortie du système d'échange 4 afin d'augmenter le séchage dans le module de séchage à haute température 34.

Un mesureur en ligne de la siccité des boues au module de sortie 33 permet d'adapter les conditions nécessaires de séchage dans la boucle basse température d'entrée 10 du compartiment de séchage à basse température 36 et donc, par voie de conséquence, la demande en énergie en 9.

En particulier, la consigne de température dans la boucle basse température d'entrée 10, ou la consigne de température ou d'humidité dans la boucle basse température de sortie 11 peut être établie en fonction de la siccité des boues dans le module de sortie 33. Ces consignes peuvent être pilotées par la chaudière 9, ou tout autre système d'apport en énergie additionnelle, qui apportera plus ou moins d'énergie.

En cas de non besoin d'énergie additionnelle 9, l'installation se régule automatiquement. Si l'eau dans la boucle 6 devient trop chaude, par exemple parce que le besoin en séchage du module de séchage à basse température est faible (siccité trop élevée) et que le débit d'air dans la boucle intermédiaire 15 est diminué, la condensation dans le condenseur 3 se passe moins bien et le besoin de réchauffage du système d'échange 4 est plus faible, diminuant automatiquement la siccité en sortie du compartiment de séchage à haute température 34.

En cas d'augmentation trop forte de la température de l'eau dans la boucle 6, par exemple atteignant un état proche de la vaporisation, ou de température trop élevée en entrée du système d'échange 4, par exemple supérieure à 100°C, la consigne de température en sortie du système d'échange 4 par l'énergie externe 5 est pilotée automatiquement pour être diminuée.

En outre, la température au condenseur 16 de la pompe à chaleur 18 peut être mesurée par exemple sur l'écoulement d'air sortant du condenseur ou à la sortie du condenseur pour le frigorigène.

En effet, une pompe à chaleur est d'autant plus efficace que l'écart de température entre l'évaporateur 14 et le condenseur 16 de la pompe à chaleur 18 est faible. Donc pour l'efficacité du système, il vaut mieux limiter la température haute de la pompe à chaleur quitte au besoin à compléter le chauffage par un autre moyen. Il en résulte que la puissance de froid disponible à l'évaporateur de la pompe à chaleur est limitée. Si la température augmente à l'évaporateur de la pompe à chaleur, c'est que la puissance de froid est insuffisante pour condenser ce qui reste d'humidité dans l'air et pour produire l'air de refroidissement. Comme la puissance nécessaire pour l'air de refroidissement n'est pas directement maîtrisable, il faut alors augmenter le débit d'eau perdue 13 pour accroître l'assèchement dans la première étape de condensation.

### Pilotage de la pompe à chaleur

La pompe à chaleur 18 prélève de la chaleur pour atteindre une consigne donnée de température d'air froid (sur tout ou partie du flux). Cette consigne peut provenir d'une mesure de température des boues dans le module de sortie 33.

Le réchauffage dans le condenseur 16 de la pompe à chaleur 18 n'est pas piloté mais est une conséquence du fonctionnement de la pompe à chaleur 18.

La condensation dans l'échangeur 12 est commandée afin d'avoir une température de consigne en sortie de condensation dépendant de l'opérateur pour avoir un air plus sec qui permettra un meilleur séchage. On pourra aussi adopter une température dépendante de la température voulue de l'air en sortie de la pompe à chaleur 18.

D'autres régulations comme la vitesse de déplacement d'une bande peuvent être mises en place, en particulier lorsque le sécheur comporte plusieurs étages.

Le sécheur selon la présente invention, comportant plusieurs boucles de chaleur distinctes, permet d'avoir de multiples paramètres de modulation et de contrôle de la siccité finale tout en consommant un minimum d'énergie.

Bien sûr, l'invention n'est pas limitée aux exemples qui viennent d'être décrits et de nombreux aménagements peuvent être apportés à ces exemples sans sortir du cadre de l'invention tel qu'il est défini dans les revendications.

## Revendications

1. Procédé de séchage thermique de produits pâteux, en particulier de boues résiduaires, comprenant :
- une étape de dépôt des produits pâteux sur au moins une bande transporteuse (98), le dépôt étant réalisé dans un module d'entrée (31),
- une étape de déplacement des produits pâteux depuis le module d'entrée (31) jusqu'à un module de sortie (33), le déplacement des produits pâteux étant réalisé par déplacement de l'au moins une bande transporteuse (98, 99),
- une étape d'extraction des produits pâteux de l'au moins une bande transporteuse (99), l'extraction étant réalisée dans le module de sortie (33),
comprenant en outre, pendant l'étape de déplacement :
- une étape de séchage à haute température dans laquelle les produits pâteux sont soumis à un écoulement d'air à haute température (1) au sein d'au moins un compartiment de séchage à haute température (34), puis
- une étape de séchage à basse température dans laquelle les produits pâteux sont soumis à un écoulement d'air à basse température (10) au sein d'au moins un compartiment de séchage à basse température (36), l'écoulement d'air à basse température (10) ayant une température inférieure à l'écoulement d'air à haute température (1), l'étape de séchage à basse température intervenant après l'étape de séchage à haute température,
**caractérisé en ce qu'**il comprend en outre, après l'étape de séchage à basse température, une étape de refroidissement dans laquelle les produits pâteux sont soumis à un écoulement d'air froid (15) au sein d'au moins un compartiment de refroidissement (35), l'écoulement d'air froid (15) ayant une température inférieure à la température de l'écoulement d'air à basse température (10),
et **en ce qu'**on refroidit les produits pâteux avec du froid produit à un évaporateur (14) d'une pompe à chaleur (18) dont on utilise un condenseur (16) pour réchauffer l'un desdits écoulements d'air.

2. Procédé selon la revendication 1, **caractérisé en ce qu'**on augmente la température de l'air à basse température (10) avec de la chaleur (6) récupérée dans l'écoulement d'air (2) sortant de l'au moins un compartiment de séchage à haute température (34),
et **en ce que** la chaleur récupérée (6) comprend de la chaleur de condensation de l'humidité contenue dans l'écoulement d'air (2) sortant de l'au moins un compartiment de séchage à haute température (34).

3. Procédé selon la revendication 1 ou 2, **caractérisé en ce qu'**on chauffe l'air de séchage à basse température avec la pompe à chaleur (18) dont on utilise l'évaporateur (14) pour refroidir les produits pâteux ayant subi l'étape de séchage à basse température,
et **en ce qu'**on utilise aussi l'évaporateur (14) de la pompe à chaleur (18) pour une deuxième étape de condensation de l'eau contenue dans l'écoulement d'air à basse température ayant déjà subi une première étape de condensation.

4. Procédé selon l'une des revendications 1 à 3, **caractérisé en ce qu'**on régule la puissance de la pompe à chaleur (18) pour ne pas dépasser un seuil de température haut prédéterminé pour l'air sortant du condenseur (16) de la pompe à chaleur (18), et **en ce qu'**on régule la puissance de l'étape de séchage à basse température pour ne pas dépasser un seuil de température bas de l'évaporateur (14) de la pompe à chaleur (18).

5. Procédé selon l'une des revendications 1 à 4, dans lequel on chauffe l'air à basse température (10) avec de la chaleur fatale (7).

6. Procédé selon l'une des revendications 1 à 5, comprenant en outre successivement :
- une étape d'assèchement de l'écoulement d'air à basse température (11) après son contact avec les produits pâteux,
- une étape de réchauffement de l'écoulement d'air asséché en faisant passer cet écoulement au contact thermique du condenseur (16) de la pompe à chaleur (18), cette étape de réchauffement générant un écoulement d'air réchauffé,
- une étape de réutilisation de l'écoulement d'air réchauffé en tant qu'écoulement d'air à basse température,
**caractérisé en ce que** pour l'étape d'assèchement on fait passer l'écoulement d'air à basse température par l'évaporateur (14) de la pompe à chaleur (18).

7. Procédé selon l'une des revendications 1 à 6, **caractérisé en ce que** l'air à haute température (1) est à une température supérieure à 100°C, de préférence dans la plage de 100 à 200°C, à son arrivée sur les produits pâteux dans l'au moins un compartiment de séchage à haute température (34),
et **en ce que** l'air à basse température (10) est à une température dans la plage de 20 à 90°C à son arrivée sur les produits pâteux dans l'au moins un compartiment de séchage à basse température (36).

8. Sécheur pour la mise en oeuvre d'un procédé selon l'une des revendications 1 à 7, comprenant :
- un module d'entrée (31) pour l'alimentation en produits pâteux à une extrémité amont d'un trajet de traitement,
- au moins une bande transporteuse (98, 99) permettant de recevoir les produits pâteux à l'extrémité amont du trajet de traitement et les déplacer le long du trajet du traitement,
- un module de sortie (33) permettant d'extraire les produits pâteux à une extrémité aval du trajet de traitement,
- derrière le module d'entrée (31) le long du trajet de traitement, au moins un module de séchage à haute température comportant au moins un compartiment de séchage à haute température (34) et au moins un circuit à haute température, l'au moins un circuit à haute température étant apte à générer un écoulement d'air à haute température (1) au sein de l'au moins un compartiment de séchage à haute température (34),
- entre le module de séchage à haute température et le module de sortie le long du trajet de traitement, au moins un module de séchage à basse température comportant au moins un compartiment de séchage à basse température (36) et au moins un circuit à basse température, l'au moins un circuit à basse température étant apte à générer un écoulement d'air à basse température (10) au sein de l'au moins un compartiment de séchage à basse température (36), l'écoulement d'air à basse température (10) ayant une température inférieure à l'écoulement d'air à haute température (1),
**caractérisé en ce qu'**il comprend en outre, entre le module de séchage à basse température et le module de sortie (33) le long du trajet de traitement, au moins un module de refroidissement, l'au moins un module de refroidissement comportant au moins un compartiment de refroidissement (35) et au moins un circuit de refroidissement, l'au moins un circuit de refroidissement étant apte à générer un écoulement d'air froid (15) au sein de l'au moins un compartiment de refroidissement (35), l'écoulement d'air froid (15) ayant une température inférieure à la température de l'écoulement d'air à basse température (10),
et **en ce qu'**il comprend en outre une pompe à chaleur (18) comportant un évaporateur (14) et un condenseur (16), l'évaporateur (14) étant adapté et monté dans le sécheur de façon à refroidir les produits pâteux avec du froid produit par l'évaporateur (14), le condenseur (16) étant adapté et monté dans le sécheur de façon à réchauffer l'un desdits écoulements d'air.

9. Sécheur selon la revendication 8, comprenant en outre au moins un module de retournement (32) apte à transférer les produits pâteux d'une bande transporteuse (98) à une autre bande transporteuse (99) à un certain stade le long du trajet de traitement.

10. Sécheur selon l'une des revendications 8 ou 9, **caractérisé en ce que** l'au moins un circuit à haute température comprend au moins un condenseur (3) apte à condenser au moins une partie de l'eau contenue dans l'air écoulé (2) au sein de l'au moins un compartiment de séchage à haute température (34), l'au moins un condenseur (3) servant de moyen de chauffage pour l'écoulement d'air à basse température (10).

11. Sécheur selon la revendication 10, **caractérisé en ce que** l'écoulement d'air à basse température (10) est réchauffé par ledit au moins un condenseur (3) après avoir subi un premier réchauffage.

12. Sécheur selon la revendication 11, **caractérisé en ce que**, après la sortie du compartiment de séchage à basse température (36), l'écoulement d'air à basse température (11) passe par l'évaporateur (14) de la pompe à chaleur (18) puis pour ledit premier réchauffage par un condenseur (16) de la pompe à chaleur (18).

13. Sécheur selon la revendication 12, **caractérisé en ce que**, entre la sortie du compartiment de séchage à basse température (36) et ledit évaporateur (14), l'écoulement d'air à basse température (11) passe par un échangeur (12), en particulier à eau perdue (13), pour condenser partiellement l'eau contenue dans l'écoulement d'air à basse température (11).

14. Sécheur selon l'une des revendications 8 à 13, **caractérisé en ce qu'**il comprend au moins un circuit d'eau chaude basse température (6) dans lequel circule de l'eau pour le chauffage de l'écoulement d'air à basse température (10),
et **en ce que** l'eau circulant dans l'au moins un circuit d'eau chaude basse température (6) est chauffée par l'au moins un condenseur (3).

15. Sécheur selon la revendication 14, **caractérisé en ce que** l'eau circulant dans l'au moins un circuit d'eau chaude basse température (6) est chauffée par au moins une source d'énergie extérieure (7, 9).

## Patentansprüche

1. Thermisches Trocknungsverfahren von pastösen Produkten, insbesondere von zurückbleibendem Schlamm, umfassend:
- eine Ablaufschritt für das Depot des pastösen Produkts auf zumindest einem Förderband (98); das Depot wird durch ein Eingangsmodul eingespeist (31),
- eine Ablaufschritt für die Weiterbeförderung des pastösen Produkts vom Eingangsmodul (31) bis zum Ausgangsmodul (33); die Verlagerung des pastösen Produkts erfolgt durch die Fortbewegung mindestens eines Förderbandes (98, 99),
- eine Ablaufschritt für die Produktextraktion auf mindestens einem Förderband (99), die Extraktion erfolgt durch das Ausgangsmodul (33),
ferner, während der Weiterbeförderungsablaufschritt, umfassend:
- eine Trocknungsablaufschritt bei hohen Temperaturen, während der die pastösen Produkte einem Luftstrom mit Höchsttemperaturen ausgesetzt sind (1), in mindestens einer Hochtemperatur-Trockenkammer (34), dann
- eine Trocknungsablaufschritt bei niedrigen Temperaturen, in welcher die pastösen Produkte einem Niedrigtemperatur-Luftstrom (10) in mindestens einer Trockenkammer mit geringen Temperaturen (36) ausgesetzt sind; der Niedrigtemperatur-Luftstrom (10) verfügt über niedrigere Temperaturen als der des Luftstroms mit Höchsttemperaturen (1); die Trocknungsphase bei niedrigen Temperaturen erfolgt nach der Trocknungsphase mit Höchsttemperaturen, **gekennzeichnet dadurch, dass** ferner, nach der Trocknungsablaufschritt mit niedrigen Temperaturen, eine Kühlungsablaufschritt umfasst wird, während der die pastösen Produkte einem Kaltluftstrom (15) in zumindest einer Kühl-Zone (35) ausgesetzt sind; die Temperatur des Kaltluftstroms (15) ist niedriger als die des Luftstroms bei geringeren Temperaturen (10),
und dass die pastösen Produkte durch ein Kühlprodukt am Verdampfer (14) einer Wärmepumpe (18) abkühlen, dessen Kondensator (16) dazu verwendet wird, um die benannten Luftströme zu erwärmen.

2. Verfahren gemäß Anspruch 1, **dadurch gekennzeichnet, dass** man die Temperatur des Niedrigtemperatur-Luftstroms (10) mit der zurückgewonnenen Hitze (6) im ausgehenden Luftstrom (2) aus mindestens einer Trockenkammer mit Höchsttemperaturen (34) erhöht,
und dass die zurückgewonnene Hitze (6) die Kondensationswärme der kontinuierlichen Feuchtigkeit im Luftstrom (2), austretend aus zumindest einer Trockenkammer, mit Höchsttemperaturen umfasst (34).

3. Verfahren gemäß Anspruch 1 oder 2, **dadurch gekennzeichnet, dass** man die Trockenluft zu niedrigen Temperaturen mit der Wärmepumpe (18) durch die Verwendung eines Verdampfers (14) zur Kühlung der pastösen Produkte, die bei niedrigen Temperaturen getrocknet wurden, erwärmt,
und dass man auch den Verdampfer (14) der Wärmepumpe (18) für eine zweite Ablaufschritt zur kontinuierlichen Wasser-Kondensation im Luftstrom nach seiner ersten Kondensations-Ablaufschritt zu niedrigen Temperaturen verwendet.

4. Verfahren gemäß einer der Ansprüche von 1 bis 3, **dadurch gekennzeichnet, dass** man die Leistung der Wärmepumpe (18) steuert, um den vorbestimmten Höchsttemperatur-Schwellwert des Verdampfers (16) der Wärmepumpe (18) nicht zu überschreiten und dass man die Leistung der Trockenphase bei niedrigen Temperaturen reguliert, um den Schwellwert der Niedrigtemperatur des Verdampfers (14) der Wärmepumpe (18) nicht zu übersteigen.

5. Verfahren gemäß einer der Ansprüche von 1 bis 4, während dessen man die niedrige Lufttemperatur (10) mit der Abwärme (7) erhitzt.

6. Verfahren gemäß einer der Ansprüche von 1 bis 5, ferner aufeinanderfolgend umfassend:
- eine Trocknungsablaufschritt des Luftstroms mit niedrigen Temperaturen (11) nach der Kontaktierung der pastösen Produkte,
- eine Aufwärmablaufschritt des getrockneten Luftstroms durch die Überführung des Luftstroms in thermischer Kontaktierung des Kondensators (16) der Wärmepumpe (18); diese Aufwärm-Ablaufschritt generiert einen erwärmten Luftstrom,
- eine Wiederverwendungsablaufschritt des erwärmten Luftstroms, vorausgesetzt, dass Luft bei niedrigen Temperaturen zirkuliert,
**dadurch gekennzeichnet, dass** man für die Trocknungsablaufschritt den Luftstrom mit niedrigen Temperaturen durch den Verdampfer (14) der Wärmepumpe (18) passieren lässt.

7. Verfahren gemäß einer der Ansprüche von 1 bis 6, **dadurch gekennzeichnet, dass** die Luft mit hohen Temperaturen (1) bei Temperaturen über 100°C liegt, bevorzugter weise bei der Ankunft an den pastösen Produkten im Bereich von 100° bis 200°C in mindestens einer Trockenkammer zu Höchsttemperaturen (34),
und dass die Luft zu niedrigen Temperaturen (10) bei einer Temperatur bei seiner Ankunft an den pastösen Produkten im Bereich von 20° bis 90°C in mindestens einer Trockenkammer zu Niedrigtemperaturen (36) liegt.

8. Trockner für die Umsetzung eines Verfahrens gemäß einer der Ansprüche von 1 bis 7, umfassend:
- ein Eingangsmodul (31) für die Einspeisung der pastösen Produkte an einem stromaufwärtigen Bearbeitungsende,
- mindestens ein Förderband (98, 99), das die Rezeption der pastösen Produkte an einem stromaufwärtigen Bearbeitungsenden sowie die Fortbewegung während der gesamten Bearbeitungszeit ermöglicht,
- ein Ausgangsmodul (33), das die Extraktion der pastösen Produkte am stromabwärtigen Bearbeitungsende zulässig macht,
- hinter dem Eingangsmodul (31) während der gesamten Bearbeitungszeit mindestens ein Trockenmodul mit hohen Temperaturen mit mindestens einer Trockenkammer zu Höchsttemperaturen (34) und wenigstens einem Umlauf zu Höchsttemperaturen, der die Erzeugung eines Luftstroms zu Höchsttemperaturen (1) in mindestens einer Trockenkammer zu Höchsttemperaturen (34) ermöglicht,
- zwischen dem Trockenmodul zu Höchsttemperaturen und dem Ausgangsmodul während der Bearbeitungszeit zumindest ein Trockenmodul mit niedrigen Temperaturen in wenigstens einer Trockenkammer zu niedrigen Temperaturen (36) mit mindestens einem Niedrigtemperatur-Umlauf, der die Erzeugung des Luftstroms zu niedrigen Temperaturen (10) in wenigstens einer Niedrigtemperatur-Trockenkammer (36) ermöglicht; der Luftstrom mit niedrigen Temperaturen (10) verfügt über eine geringere Temperatur als der Luftstrom mit hohen Temperaturen (1),
**dadurch gekennzeichnet, dass** es ferner zwischen dem Niedrigtemperatur-Trockenmodul und dem Ausgangsmodul (33) während der gesamten Bearbeitungszeit mindestens ein Kühlmodul mit wenigstens einer Kühlkammer (35) und einem Kühlumlauf mit der Erzeugungskapazität eines Kaltluftstroms (15) in zumindest einer Kühlkammer (35) mit einem Kaltluftstrom (15) zu geringeren Temperaturen als die der Niedrigluft-Zirkulation (10) umfasst,
und ferner eine Wärmepumpe (18) umfassend einen Verdampfer (14) sowie einem Kondensator (16); einem Verdampfer (14), der im Trockner montiert dazu fähig ist, die pastösen Produkte mit dem Trockenprodukt, das durch den Verdampfer (14) erzeugt wird, abzukühlen; den Kondensator (16), der im Trockner montiert die Kapazität besitzt, die benannten Luftströme zu erhitzen.

9. Trockner gemäß Anspruch 8, umfassend unter anderem mindestens ein Umdrehmodul (32), mit Kapazität, während einer gewissen Phase in der Behandlungsablaufschritt die pastösen Produkte von einem Förderband (98) zu einem anderen Förderband (99) zu transferieren.

10. Trockner gemäß einem der Ansprüche 8 oder 9, **dadurch gekennzeichnet, dass** wenigstens ein Hochtemperatur-Kreislauf mindestens einen Kondensator (3) umfasst, der dazu fähig ist, zumindest einen Teil des enthaltenen Wassers im Luftstrom (2) in mindestens einer Trockenkammer mit Höchsttemperaturen (34) in wenigstens einem Kondensator (3), der als Heizmittel für den Luftstrom zu niedrigen Temperaturen (10) dient, zu verdichten.

11. Trockner gemäß Verfahren 10, **dadurch gekennzeichnet, dass** der Niedrigtemperatur-Luftstrom (10) durch den gebundenen erhitzt wird und dies durch mindestens einen Kondensator (3), im Anschluss an das ersten Erwärmen.

12. Trockner gemäß Verfahren 11, **dadurch gekennzeichnet, dass** nach dem Auslass der Trockenkammer zu niedrigen Temperaturen (36) der Luftstrom zu niedrigen Temperaturen (11) durch den Verdampfer (14) der Wärmepumpe (18) passiert, um dann das vorhin genannte erste Erwärmen durch einen Kondensator (16) der Wärmepumpe (18) zu ermöglichen.

13. Trockner gemäß Verfahren 12, **dadurch gekennzeichnet, dass** zwischen dem Auslass der Niedrigtemperatur-Trockenkammer (36) und dem gebundenen Verdampfer (14) der Luftstrom zu niedrigen Temperaturen (11) durch den Austauscher (12) erfolgt, insbesondere durch Verlustwasser (13), um teilweise das kontinuierliche Kondenswasser im Niedrigtemperatur-Luftstrom (11) zu kondensieren.

14. Trockner gemäß einer der Ansprüche von 8 bis 13, **dadurch gekennzeichnet, dass** er mindestens einen Warmwasserumlauf zu geringeren Temperaturen umfasst (6), in dem das Wasser für die Erhitzung der Niedrigtemperatur-Luftstroms (10) zirkuliert,
und dass das zirkulierende Wasser mindestens in einem Warmwasserumlauf zu niedrigen Temperaturen (6) in wenigstens einem Kondensator (3) erhitzt wird.

15. Trockner gemäß Anspruch 14, **dadurch gekennzeichnet, dass** das zirkulierende Wasser in wenigstens einem Warmwasserumlauf zu niedrigen Temperaturen (6) durch zumindest eine externe Energiequelle (7, 9) erhitzt wird.

## Claims

1. A method for the thermal drying of pasty products, particularly wastewater sludge, comprising:
- a step of depositing the pasty products on at least one conveyor belt (98), the depositing being performed in an inlet module (31),
- a step of moving the pasty products from the inlet module (31) as far as an outlet module (33), the moving of the pasty products being performed by moving the at least one conveyor belt (98, 99),
- a step of extracting the pasty products from the at least one conveyor belt (99), the extracting being performed in the outlet module (33),
further comprising, during the moving step:
- a high-temperature drying step in which the pasty products are subjected to a high-temperature air flow (1) within at least one high-temperature drying compartment (34), then
- a low-temperature drying step in which the pasty products are subjected to a low-temperature air flow (10) within at least one low-temperature drying compartment (36), the low-temperature air flow (10) having a lower temperature than the high-temperature air flow (1), the low-temperature drying step occurring after the high-temperature drying step,
**characterized in that** it further comprises, after the low-temperature drying step, a cooling step in which the pasty products are subjected to a cold air flow (15) within at least one cooling compartment (35), the cold air flow (15) having a temperature lower than the temperature of the low-temperature air flow (10),
and **in that** the pasty products are cooled using cold produced at an evaporator (14) of a heat pump (18) of which a condenser (16) is used to heat up one of the said air flows.

2. The method as claimed in claim 1, **characterized in that** the temperature of the low-temperature air (10) is increased using heat (6) recovered from the air flow (2) leaving the at least one high-temperature drying compartment (34),
and **in that** the recovered heat (6) comprises heat of condensation of the moisture contained in the air flow (2) leaving the at least one high-temperature drying compartment (34).

3. The method as claimed in claim 1 or 2, **characterized in that** the low-temperature drying air is heated with the heat pump (18) of which the evaporator (14) is used to cool the pasty products that have undergone the low-temperature drying step,
and **in that** the evaporator (14) of the heat pump (18) is also used for a second step of condensing the water contained in the low-temperature air flow that has already undergone a first condensation step.

4. The method as claimed in one of claims 1 to 3, **characterized in that** the power of the heat pump (18) is regulated so as not to exceed a predetermined high temperature threshold for the air leaving the condenser (16) of the heat pump (18), and **in that** the power of the low-temperature drying step is regulated so as not to exceed a low temperature threshold for the evaporator (14) of the heat pump (18).

5. The method as claimed in one of claims 1 to 4, in which the low-temperature air (10) is heated using residual heat (7).

6. The method as claimed in one of claims 1 to 5, further comprising in succession:
- a step of drying the low-temperature air flow (11) after it has been in contact with the pasty products,
- a step of heating the flow of dried air by causing this flow to pass in thermal contact with the condenser (16) of the heat pump (18), this heating-up step generating a heated-up-air flow,
- a step of reusing the heated-up air flow as a low-temperature air flow,
**characterized in that**, for the drying step, the low-temperature air flow is passed through the evaporator (14) of the heat pump (18).

7. The method as claimed in one of claims 1 to 6, **characterized in that** the high-temperature air (1) is at a temperature higher than 100°C, preferably in the range from 100 to 200°C when it arrives at the pasty products in the at least one high-temperature drying compartment (34),
and **in that** the low-temperature air (10) is at a temperature in the range from 20 to 90°C when it arrives at the pasty products in the at least one low-temperature drying compartment (36).

8. A dryer for implementing a method as claimed in one of claims 1 to 7, comprising:
- an inlet module (31) for supplying an upstream end of a treatment path with pasty products,
- at least one conveyor belt (98, 99) allowing the pasty products to be received at the upstream end of the treatment path and moving them along the treatment path,
- an outlet module (33) allowing the pasty products to be extracted at a downstream end of the treatment path,
- behind the inlet module (31) along the treatment path, at least one high-temperature drying module comprising at least one high-temperature drying compartment (34) and at least one high-temperature circuit, the at least one high-temperature circuit being able to generate a high-temperature air flow (1) within the at least one high-temperature drying compartment (34),
- between the high-temperature drying module and the outlet module along the treatment path, at least one low-temperature drying module comprising at least one low-temperature drying compartment (36) and at least one low-temperature circuit, the at least one low-temperature circuit being able to generate a low-temperature air flow (10) within the at least one low-temperature drying compartment (36), the low-temperature air flow (10) having a temperature lower than the high-temperature air flow (1),
**characterized in that** it comprises further between the low-temperature drying module and the outlet module (33) along the treatment path, at least one cooling module, the at least one cooling module comprising at least one cooling compartment (35) and at least one cooling circuit, the at least one cooling circuit being able to generate a cold air flow (15) within the at least one cooling compartment, the cold air flow (15) having a temperature lower than the temperature of the low-temperature air flow (10),
and **in that** it comprises further a heat pump (18) having an evaporator (14) and a condenser (16), said evaporator being suitably integrated into the dryer in order to cool the pasty products using cold produced at the evaporator, said condenser being suitably integrated into the dryer in order to heat up one of the said air flows.

9. The dryer as claimed in claim 8, further comprising at least one turning-over module (32) able to transfer the pasty products from one conveyor belt (98) to another conveyor belt (99) at a certain stage along the treatment path.

10. The dryer as claimed in one of claims 8 or 9, **characterized in that** the at least one high-temperature circuit comprises at least one condenser (3) able to condense at least part of the water contained in the flowed air (2) within the at least one high-temperature drying compartment (34), the at least one condenser (3) acting as a heating means for the low-temperature air flow (10).

11. The dryer as claimed in claim 10, **characterized in that** the low-temperature air flow (10) is heated up by said at least one condenser (3) after having undergone a first heating-up.

12. The dryer as claimed in claim 11, **characterized in that**, after leaving the low-temperature drying compartment (36), the low-temperature air flow (11) passes through the evaporator (14) of the heat pump (18) and then for said first heating-up through a condenser (16) of the heat pump (18).

13. The dryer as claimed in claim 12, **characterized in that**, between the outlet of the low-temperature drying compartment (36) and said evaporator (14), the low-temperature air flow (11) passes through an exchanger (12), particularly a water lost (13) exchanger, to partially condense the water contained in the low-temperature air flow (11).

14. The dryer as claimed in one of claims 8 to 13, **characterized in that** it comprises at least one low-temperature hot-water circuit (6) in which there circulates water for heating the low-temperature air flow (10),
and **in that** the water circulating in the at least one low-temperature hot-water circuit (6) is heated by the at least one condenser (3).

15. The dryer as claimed in claim 14, **characterized in that** the water circulating in the at least one low-temperature - hot-water circuit (6) is heated by at least one external energy source (7, 9).
